# EUROPEAN PATENT APPLICATION

(11) **EP 4 773 081 A1**
(43) Date of publication of application: **08.07.2026**
(21) Application number: 24882801.4
(22) Date of filing: 23.10.2024
(51) Int. Cl.: G06T 7/571, G06T 1/60, G06T 7/194, G06T 5/77, G06T 11/60

(54) **ELECTRONIC DEVICE FOR EDITING IMAGE ON BASIS OF FOCAL LENGTH, AND OPERATING METHOD THEREOF**

(30) Priority: 25.10.2023 KR 20230143565; 19.12.2023 KR 20230185823
(71) Applicant: Samsung Electronics Co., Ltd., Suwon-si, Gyeonggi-do 16677 (KR)
(72) Inventor: KIM, Sungtae, Suwon-si, Gyeonggi-do 16677 (KR); MUN, Jihun, Suwon-si, Gyeonggi-do 16677 (KR); PARK, Jiyoon, Suwon-si, Gyeonggi-do 16677 (KR); YOO, Nagyeom, Suwon-si, Gyeonggi-do 16677 (KR); HYUN, Daeyoung, Suwon-si, Gyeonggi-do 16677 (KR)
(74) Representative: HGF
(86) International application number: PCT/KR2024/016139
(87) International publication number: WO 2025/089774

(57) **Abstract**

An electronic device, according to one embodiment, comprises: a processor; and a memory that stores instructions. The instructions, according to one embodiment, when executed by the processor, may be configured to instruct the electronic device to acquire a first image captured on the basis of a first focal length. The instructions, according to one embodiment, when executed by the processor, may be configured to instruct the electronic device to identify a first subject image corresponding to a first subject included in the first image and a first background image corresponding to a first background of the first subject, in response to a command for editing the first image. The instructions, according to one embodiment, when executed by the processor, may be configured to instruct the electronic device to acquire a second subject image by transforming the first subject image on the basis of a target focal length by using an AI model. The instructions, according to one embodiment, when executed by the processor, may be configured to instruct the electronic device to acquire a second image corresponding to the target focal length, the second image including the second subject image modified on the basis of the target focal length.

## Description

### [Technical Field]

The disclosure relates to an electronic device for editing an image, based on a focal length, and an operation method thereof.

### [Background Art]

Driven by remarkable advancements in information and communication technology and semiconductor technology, distribution and use of various electronic devices have been rapidly increasing. Electronic devices are being developed to allow users to carry the electronic devices for communication. An electronic device may refer to an apparatus that performs specific functions according to installed programs, such as a mobile communication terminal, a tablet PC, an audio/video device, a desktop/laptop computer, or a vehicle navigation system.

Recently, beyond simply capturing images using an electronic device, users have shown significant interest in obtaining high-quality images comparable to those provided by advanced camera equipment. Accordingly, an electronic device offers image editing functions. The electronic device may provide an environment where a user is able to edit an image stored in the electronic device by using an image editing application.

### [Detailed Description of the Invention]

### [Technical Solution]

An electronic device according to an embodiment may include a processor and memory storing instructions. The instructions according to an embodiment may be configured to, when executed by the processor, cause the electronic device to obtain a first image captured based on a first focal length. The instructions according to an embodiment may be configured to, when executed by the processor, cause the electronic device to identify a first subject image corresponding to a first subject included in the first image and a first background image corresponding to a first background of the first subject in response to a command to edit the first image. The instructions according to an embodiment may be configured to, when executed by the processor, cause the electronic device to obtain, using an AI model, a second subject image by transforming the first subject image based on a target focal length. The instructions according to an embodiment may be configured to, when executed by the processor, cause the electronic device to obtain a second image corresponding to the target focal length, the second image including the second subject image transformed based on the target focal length.

An operation method of an electronic device according to an embodiment may include obtaining a first image captured based on a first focal length. The operation method of the electronic device according to an embodiment may include identifying a first subject image corresponding to a first subject included in the first image and a first background image corresponding to a first background of the first subject in response to a command to edit the first image. The operation method of the electronic device according to an embodiment may include obtaining, using an AI model, a second subject image by transforming the first subject image, based on a target focal length. The operation method of the electronic device according to an embodiment may include obtaining a second image corresponding to the target focal length, the second image including the second subject image transformed based on the target focal length.

A non-transitory computer-readable recording medium according to an embodiment may store instructions to execute an operation of obtaining a first image captured based on a first focal length, an operation of identifying a first subject image corresponding to a first subject included in the first image and a first background image corresponding to a first background of the first subject in response to a command to edit the first image, an operation of obtaining, using an AI model, a second subject image by transforming the first subject image, based on a target focal length, and an operation of obtaining a second image corresponding to the target focal length, the second image including the second subject image transformed based on the target focal length.

### [Brief Description of Drawings]

FIG. 1 is a block diagram illustrating an electronic device in a network environment according to an embodiment.
FIG. 2 is a diagram illustrating a method of converting a first image captured based on a first focal length into a second image corresponding to a target focal length according to an embodiment.
FIG. 3 is a diagram illustrating a method of training an image generation model according to an embodiment.
FIG. 4 is a schematic block diagram illustrating an electronic device according to an embodiment.
FIG. 5 is a flowchart illustrating an operation of an electronic device according to an embodiment.
FIG. 6 is a diagram illustrating an operation of an image generation model according to an embodiment.
FIG. 7 is a flowchart illustrating a method in which an electronic device changes a focal length of a subject or a background included in a first image according to an embodiment.
FIG. 8A is a diagram illustrating a method in which an electronic device changes a focal length of a background included in a first image according to an embodiment.
FIG. 8B is a diagram illustrating a method in which an electronic device changes a focal length of a subject included in a first image according to an embodiment.
FIG. 9 is a flowchart illustrating a method in which an electronic device adjusts a focal length of an image, based on a direction and a distance of a user input according to an embodiment.
FIG. 10A is a diagram illustrating a method in which an electronic device adjusts a focal length of an image, based on a user input on a slide bar according to an embodiment.
FIG. 10B is a diagram illustrating a method in which an electronic device adjusts a focal length of an image, based on a designated user input according to an embodiment.
FIG. 10C is a diagram illustrating a method in which an electronic device adjusts a focal length of an image, based on a designated user input according to an embodiment.
FIG. 11 is a flowchart illustrating a method in which an electronic device adjusts a focal length of an image, based on a distance between a display or the image displayed on the display and a user according to an embodiment.
FIG. 12A is a diagram illustrating a method in which an electronic device adjusts a focal length of an image, based on a distance between a display and a user according to an embodiment.
FIG. 12B is a diagram illustrating a method in which an electronic device adjusts a focal length of an image, based on a distance between the image displayed on a display and a user according to an embodiment.

### [Mode for Carrying out the Invention]

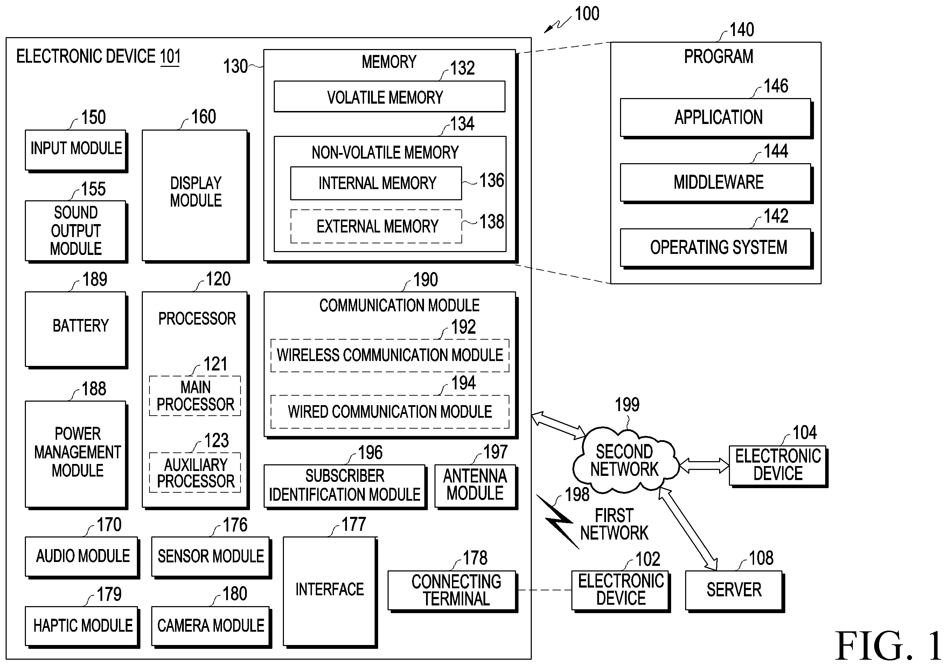

FIG. 1 is a block diagram illustrating an electronic device 101 in a network environment 100 according to an embodiment. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, components that can be easily understood through preceding embodiments may be assigned the same reference numerals or omitted, and detailed descriptions thereof may also be omitted. An electronic device according to an embodiment disclosed herein may be implemented by selectively combining configurations from different embodiments, and a configuration of one embodiment may be replaced by that of another embodiment. It should be noted, for example, that the disclosure is not limited to any specific drawings or embodiments.

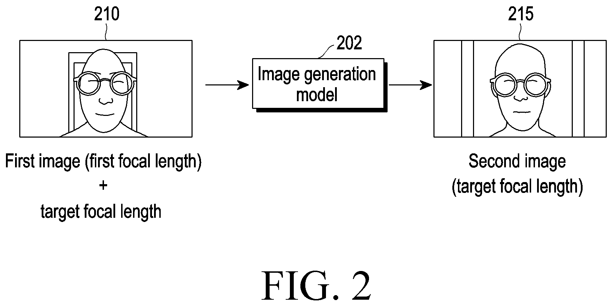

FIG. 2 is a diagram illustrating a method of converting a first image captured based on a first focal length into a second image corresponding to a target focal length according to an embodiment.

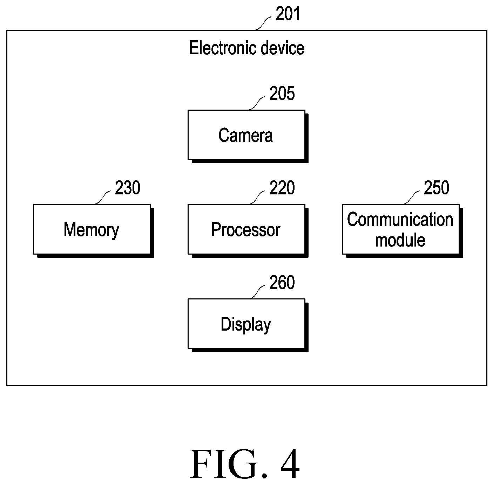

Referring to FIG. 2, an electronic device (e.g., the electronic device 101 of FIG. 1 or an electronic device 201 of FIG. 4) according to an embodiment may store an image generation model 202. For example, the image generation model 202 may include at least one artificial intelligence (AI) model. For example, the image generation model 202 may receive a first image 210 corresponding to a first focal length and information about a target focal length to generate (or obtain) a second image 215 corresponding to the target focal length. For example, the second image 215 may include only part of a background included in the first image 210, or may further include a background image not included in the first image 210. The second image 215 may include a subject similar to a subject included in the first image 210. The subject included in the second image 215 may have a partially transformed form of the subject included in the first image 210 based on a target focal length. For example, the subject included in the second image 215 may have a more three-dimensional form or a more planar form than the subject included in the first image 210.

A conventional electronic device is capable of easily converting an image captured using a camera including a lens with a specific focal length into an image corresponding to a different focal length. For example, when converting an image captured at a wide angle using a camera including a lens with a short focal length into a telephoto image, the conventional electronic device uses a method of enlarging a center portion of the image. However, when the center portion of the image is enlarged, resolution of the image may be reduced. That is, in a case of using the existing method, the electronic device is unable to obtain a natural and high-quality image.

The electronic device 101 according to various embodiments of the disclosure may effectively obtain an image corresponding to the target focal length by using the image generation model 202 including the at least one AI model. Accordingly, the electronic device 101 may provide a user with an image in which a focal length is naturally modified.

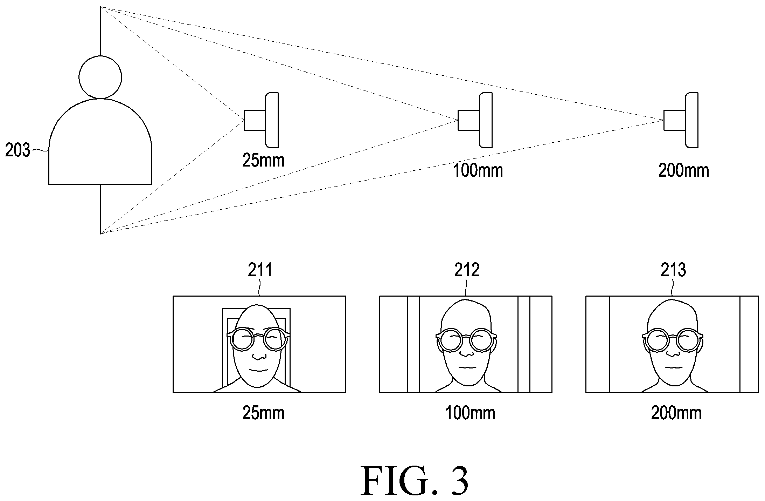

FIG. 3 is a diagram illustrating a method of training an image generation model according to an embodiment.

Referring to FIG. 3, according to an embodiment, the image generation model 202 may include at least one AI model. For example, at least one AI model may include a generative AI model. For example, the generative AI model may refer to an artificial intelligence (AI) model that newly generates similar content by using content, such as text, audio, and/or images. The generative AI model may learn patterns of content, and may generate new content as an inference result. For example, in the field of images, the generative AI model may regenerate an image that mimics a feature of a specific image.

According to an embodiment, the at least one AI model may be trained using images 211, 212, and 213 captured at a plurality focal lengths with respect to the same region or subject of interest. For example, the images 211, 212, and 213 obtained by photographing a subject 203 based on the plurality of focal length may be used as a database for training the image generation model 202. The image generation model 202 may receive information about a specific focal length (25 mm, 100 mm, or 200 mm) and an images 211, 212, and 213 of the subject 203 captured based on the specific focal length, and may perform a training operation to generate an image including the subject 203 and corresponding to an adjusted focal length.

According to an embodiment, an electronic device 101 may store the image generation model 202 previously trained according to the foregoing method. The electronic device 101 may transform a first image (e.g., the first image 210 of FIG. 2) of the subject 203 captured based on the specific focal length into a second image (e.g., the second image 215 of FIG. 2) corresponding to a target focal length by using the previously trained image generation model 202. For example, in the second image 215, the subject 203 may exhibit a partially transformed form based on the target focal length, compared to that in the first image 210.

FIG. 4 is a schematic block diagram illustrating an electronic device according to an embodiment.

Referring to FIG. 4, according to an embodiment, the electronic device 201 may include a camera 205, a processor 220, memory 230, a communication module 250, and a display 260. For example, the electronic device 201 may be configured to be the same as or similar to the electronic device 101 of FIG. 1.

According to an embodiment, the electronic device 201 may transform a first image (e.g., the first image 210 of FIG. 2) captured based on a specific focal length into a second image (e.g., the second image 215 of FIG. 2) corresponding to a target focal length by using an image generation model 202. For example, the image generation model 202 may be stored in the memory 230.

According to an embodiment, the processor 220 may control an overall operation of the electronic device 201. For example, the processor 220 may be configured to be the same as or similar to the processor 120 of FIG. 1.

According to an embodiment, the processor 220 may obtain a first image captured based on a first focal length. For example, the processor 220 may obtain the first image of a region of interest (ROI) or a specific subject (hereinafter, a first subject) captured using the camera 205. Alternatively, the processor 220 may obtain the first image captured based on the first focal length from an external electronic device. For example, the first subject may include an object, a person, an animal, and/or a plant.

For example, the first image may include an image of the first subject captured based on a focal length specified for a lens included in the camera 205 (e.g., the camera module 180 of FIG. 1). Alternatively, the first image may include an image obtained from the external electronic device through the communication module 250 (e.g., the communication module 190 of FIG. 1).

According to an embodiment, the processor 220 may store the first image in the memory 230 (e.g., the memory 130 of FIG. 1).

According to an embodiment, the processor 220 may perform an operation of editing or transforming the first image in response to a command to edit the first image. For example, the processor 220 may generate or obtain the second image in which the focal length of the first image is adjusted to the target focal length. For example, the command to edit the first image may be identified (or generated) in response to a user input.

According to an embodiment, to adjust the focal length of the first image to the target focal length, the processor 220 may identify the first subject included in the first image and a first background of the first subject. For example, the first subject may include an object, a person, an animal, and/or a plant. The first background may refer to a portion excluding the first subject from the first image.

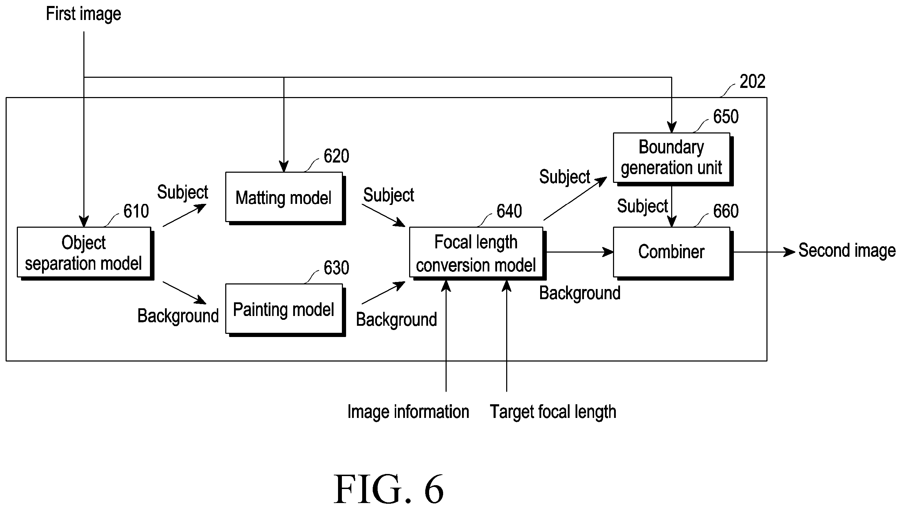

According to an embodiment, the processor 220 may separate the first subject (or a portion corresponding to the first subject) and the first background (or a portion corresponding to the first background) from the first image. For example, the processor 220 may separate the first subject and the first background by using an object separation model (e.g., an object separation model 610 of FIG. 6) stored in the memory 230. For example, the processor 220 may obtain a first subject image corresponding to the first subject and a first background image corresponding to the first background, based on an operation of separating the first subject and the first background. For example, the first subject image may refer to an image of a portion corresponding to the first subject. The first background image may refer to an image of a portion corresponding to the background (e.g., the first background) of the first subject.

According to an embodiment, the processor 220 may transform the first subject image corresponding to the first subject and a second subject image corresponding to the first background, based on the target focal length, by using an image generation model 202 (or a focal length conversion model 640 of FIG. 6) stored in the memory 230 or stored in an external server. For example, the processor 220 may obtain the first subject image and a second background image by transforming the first subject image and the first background image, based on the target focal length.

According to an embodiment, the processor 220 may obtain (or generate) the second image corresponding to the target focal length by using (or combining) the transformed second subject image and the second background image based on the target focal length. Alternatively, the processor 220 may obtain (or generate) the second image corresponding to the target focal length by using (or combining) the second subject image transformed based on the target focal length and the first background image. Alternatively, the processor 220 may obtain (or generate) the second image corresponding to the target focal length by using (or combining) the first subject image and the first background image or the second background image. The processor 220 may display the second image on the display 260 (e.g., the display module 160 of FIG. 1).

According to an embodiment, when the image generation model 202 is stored in the external server, the processor 220 may request transformation of the first subject image and the second subject image from the external server by using the communication module 250. The processor 220 may obtain the second subject image and the second background image in which the focal length is changed based on the target focal length from the external server. The processor 220 may obtain (or generate) the second image corresponding to the target focal length by using (or combining) one of the first subject image or the second subject image transformed based on the target focal length and one of the first background image or the second background image. Alternatively, the processor 220 may obtain the second image corresponding to the target focal length from the external server.

According to an embodiment, the processor 220 may obtain (or generate) the second image in which the focal length of only one of the first subject or the first background included in the first image is changed. For example, the processor 220 may change the focal length of one of the first subject or the first background to correspond to the target focal length, based on a user input associated with one of the first subject or the first background. For example, when a user input associated with the first background is identified, the processor 220 may change the focal length of the first background image, based on the target focal length while maintaining the focal length of the first subject image. Alternatively, when a user input associated with the first subject is identified, the processor 220 may change the focal length of the first subject image, based on the target focal length while maintaining the focal length of the first background image. The processor 220 may display a user interface for changing the focal length of one of the first subject or the first background on the display 260.

According to an embodiment, the processor 220 may obtain (or generate) the second image corresponding to an image in which the focal length of the first image is increased or decreased, based on a direction and a distance of a predetermined user input (e.g., a drag input or a pinch input). The processor 220 may display a user interface for identifying the predetermined user input on the display 260.

According to an embodiment, when the first image is displayed on the display 260, the processor 220 may identify a distance between the display 260 and a user by using the camera 205 and/or a sensor (e.g., an acceleration sensor) included in the electronic device 201. The processor 220 may determine a target focal length for changing the focal length of the first image, based on the identified distance. Subsequently, the processor 220 may display the second image corresponding to the determined target focal length, instead of the first image, on the display 260.

According to an embodiment, when the electronic device 201 is configured as AR glasses, a VR device, or a head-mounted display (HMD) device, the processor 220 may display a virtual first image on the display 260. The processor 220 may identify a distance between the virtual first image and the user by using the sensor (e.g., the acceleration sensor) included in the electronic device 201. The processor 220 may determine a target focal length for changing the focal length of the first image, based on the identified distance. Subsequently, the processor 220 may display a virtual second image corresponding to the determined target focal length on the display 260.

According to an embodiment, the processor 220 may generate or obtain a plurality of images corresponding to a plurality of focal lengths from the first image corresponding to the first focal length. The processor 220 may utilize the plurality of images corresponding to the plurality focal lengths as substitutes for images captured by various imaging devices (e.g., devices including lenses with different focal lengths). Accordingly, the processor 220 may utilize a plurality of images obtained with a single imaging device as images similar to images captured by various imaging devices. For example, the processor 220 may use the plurality of images as data for detection, classification, and 3D modeling. Alternatively, the processor 220 may arrange the plurality of images corresponding to the plurality of focal lengths in an order of focal lengths (e.g., an ascending or descending order), and may generate a video (or a video frame) by using the plurality of arranged images. The generated video shares feature points of the same subject, and may thus provide a dolly zoom effect.

As described above, the electronic device 201 may transform the first image captured based on the specific focal length into the second image corresponding to the target focal length. Accordingly, the electronic device 201 may provide an image in which a focal length is naturally changed to the user.

At least some of operations of the electronic device 201 to be described below may be performed by the processor 220 and the image generation model 202. However, for convenience of description, the following operations will be described as being performed by the electronic device 201.

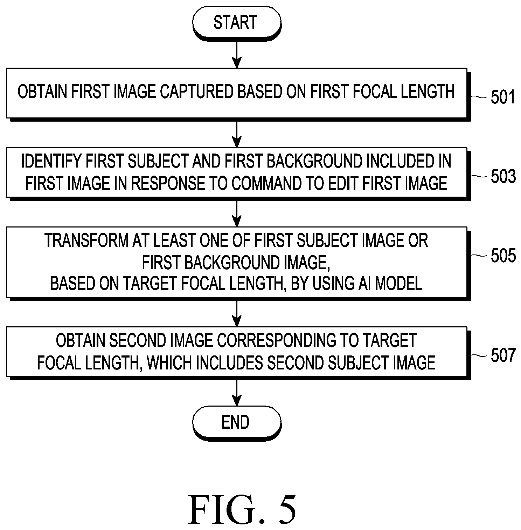

FIG. 5 is a flowchart illustrating an operation of an electronic device according to an embodiment.

Referring to FIG. 5, according to an embodiment, in operation 501, the electronic device (e.g., the electronic device 201 of FIG. 4) may obtain a first image captured based on a first focal length. For example, the first image may include a first subject captured based on the first focal length.

According to an embodiment, in operation 503, the electronic device 201 may identify the first subject and a first background included in the first image in response to a command to edit the first image. The electronic device 201 may identify and obtain a first subject image corresponding to the first subject. The electronic device 201 may perform an in-painting operation or an out-painting operation on a first area corresponding to the first subject image corresponding to the first subject that is excluded from the first image by using an AI model (e.g., a painting model 630 of FIG. 6), thereby obtaining a first background image corresponding to the first background.

According to an embodiment, in operation 505, the electronic device 201 may transform at least one of the first subject or the first background, based on a target focal length, by using an AI model stored in memory (e.g., the memory 230 of FIG. 4) or an external server. The electronic device 401 may obtain a second subject image and/or a second background image transformed based on the target focal length. Alternatively, the electronic device 201 may obtain the second subject image and/or the second background image transformed based on the target focal length, by using an AI model (e.g., a focal length conversion model 640 of FIG. 6) stored in the memory (e.g., the memory 230 of FIG. 4) or the external server.

According to an embodiment, in operation 507, the electronic device 201 may obtain a second image corresponding to the target focal length, which includes the second subject image transformed based on the target focal length. For example, the electronic device 201 may obtain the second image corresponding to the target focal length by combining the second subject image with the first background image or the second background image. According to an implementation, the electronic device 201 may obtain the second image corresponding to the target focal length (or a third image, which may be, for example, an image in which only the background is transformed based on the target focal length) by combining the first subject image with the second background image. The electronic device 201 may store the second image (and/or the third image) or display the same on a display (e.g., the display 260 of FIG. 4).

FIG. 6 is a diagram illustrating an operation of an image generation model according to an embodiment.

Referring to FIG. 6, according to an embodiment, the image generation model 202 may include an object separation model 610, a matting model 620, a painting model 630, a focal length conversion model 640, a boundary generation unit 650, and a combiner 660. For example, at least some of the components 610, 620, 630, 640, 650, and 660 included in the image generation model 202 may be configured as an AI model. According to an implementation, at least some of the components 610, 620, 630, 640, 650, and 660 included in the image generation model 202 may be omitted. Alternatively, the image generation model 202 may further include another component (e.g., another AI model).

According to an embodiment, the object separation model 610 may separate a subject and a background from a first image. For example, the object separation model 610 may separate (or obtain or identify) a portion corresponding to the subject in the first image. Further, the object separation model 610 may separate (or obtain or identify) a portion excluding the subject in the first image as the background. The object separation model 610 may provide the separated subject to the matting model 620, and may provide the separated background to the painting model 630.

According to an embodiment, the matting model 620 may compare the separated subject with the first image, and may process details of the separated subject (e.g., details of a boundary) to be visually clearer.

According to an embodiment, the painting model 630 may perform an in-painting operation or an out-painting operation on the background. For example, when a target focal length is shorter than a first focal length, the painting model 630 may perform the out-painting operation to generate a background portion not included in the first image. Alternatively, when the target focal length is longer than the first focal length, the painting model 630 may perform the in-painting operation to generate a background portion hidden by the subject. The painting model 630 may provide a background image obtained by performing the in-painting operation or the out-painting operation to the combiner 660.

According to an embodiment, the focal length conversion model 640 may obtain image information about the first image and information about the target focal length to convert a focal length of the subject and the background. For example, the image information may include information (e.g., a focal length and/or an angle of view) about a lens used to capture the first image, information about an angle of view of the first image, information about the first focal length, and a distance between a first subject and a camera that captures the first image. The focal length conversion model 640 may receive image information and information about a target focal length to change a focal length of the first image. For example, the image information may be identified based on metadata included in the first image. However, when the image information is not included in the first image, the electronic device 201 may analyze the first image to obtain the image information.

According to an embodiment, the focal length conversion model 640 may generate (or obtain) a subject by transforming the subject obtained from the matting model 620, based on the target focal length. The focal length conversion model 640 may provide the transformed subject to the boundary generation unit 650. The boundary generation unit 650 may generate a boundary of the transformed subject by comparing the first image with the transformed subject. The focal length conversion model 640 may generate (or obtain) a background image obtained by transforming the background image obtained from the painting model 630, based on the target focal length. The focal length conversion model 640 may provide the transformed background image to the combiner 660.

According to an embodiment, the combiner 660 may combine the transformed subject with the boundary generated and the transformed background image, thereby generating or obtaining a second image corresponding to the target focal length.

The components and an order of operations of the image generation model 202 illustrated in FIG. 6 are merely for illustration, and technical features of the disclosure are not limited thereto. For example, a method or order in which the image generation model 202 obtains the second image based on the first image may be changed.

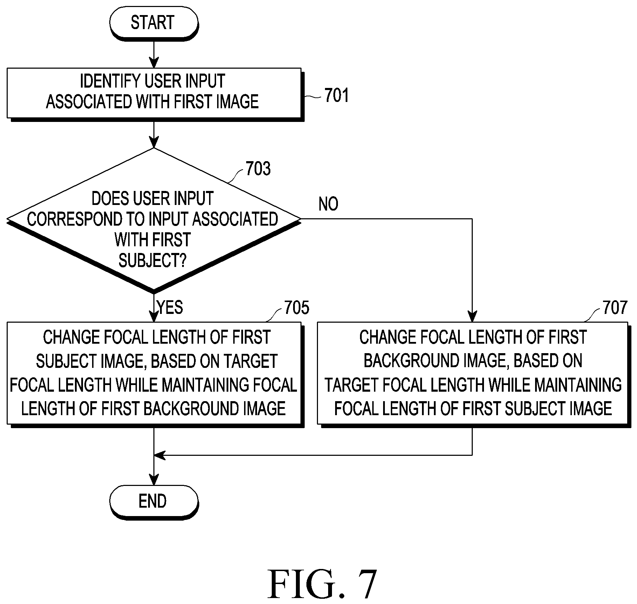

FIG. 7 is a flowchart illustrating a method in which an electronic device changes a focal length of a subject or a background included in a first image according to an embodiment.

Referring to FIG. 7, according to an embodiment, in operation 701, the electronic device (e.g., the electronic device 201 of FIG. 4) may identify a user input associated with a first image. For example, the user input may include a touch input and/or a gesture input associated with the first image.

According to an embodiment, in operation 703, the electronic device 201 may identify whether the user input is an input associated with a first subject included in the first image. For example, when a touch input associated with the first subject in the first image displayed on a display (e.g., the display 260 of FIG. 4) is identified, the electronic device 201 may identify the user input as an input associated with the first subject. However, when a touch input associated with an area (e.g., an area corresponding to a first background of the first image) other than the first subject in the first image displayed on the display 260 is identified, the electronic device 201 may identify the user input as an input associated with the first background.

According to an embodiment, when the user input is identified as the input associated with the first subject (e.g., Yes in operation 703), the electronic device 201 may change a focal length of a first subject image corresponding to the first subject, based on a target focal length while maintaining a focal length of a first background image corresponding to the first background in operation 705. For example, the electronic device 201 may obtain a second subject image transformed based on the target focal length by using an AI model (e.g., the focal length conversion model 640 of FIG. 6). The electronic device 201 may combine or compose the second subject image with the first background image, thereby obtaining (or generating) a second image in which the focal length of the first subject is changed.

According to an embodiment, when the user input is identified as not being the input associated with the first subject (No in operation 703), the electronic device 201 may change the focal length of the first background image corresponding to the first background, based on the target focal length while maintaining the focal length of the first subject image corresponding to the first subject in operation 707. For example, the electronic device 201 may obtain a second background image transformed based on the target focal length by using the AI model (e.g., the focal length conversion model 640 of FIG. 6). Further, the electronic device 201 may obtain (or generate) the second background image by performing in-painting or out-painting on a portion corresponding to the first background image. The electronic device 201 may combine the first subject image with the second background image to obtain (or generate) a second image in which the focal length of the first background is changed.

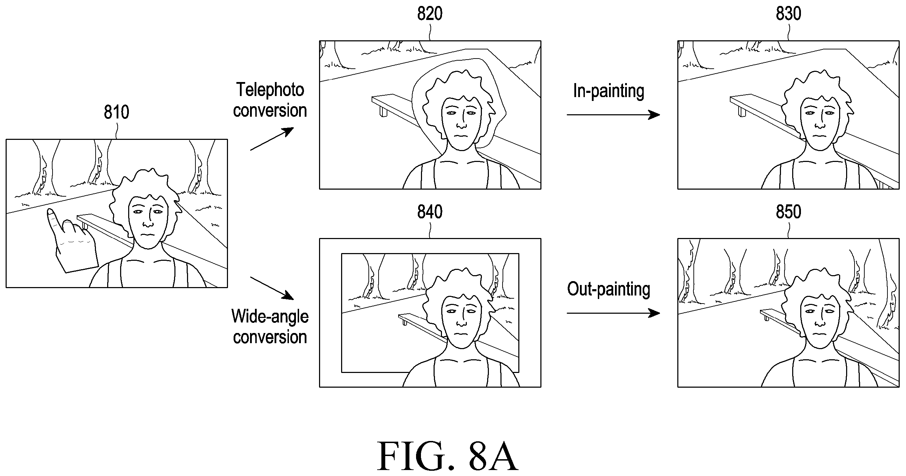

FIG. 8A is a diagram illustrating a method in which an electronic device changes a focal length of a background included in a first image according to an embodiment.

Referring to FIG. 8A, according to an embodiment, the electronic device (e.g., the electronic device 201 of FIG. 4) may identify a user input (e.g., a touch input) associated with a first background included in a first image 810 corresponding to a first focal length displayed on a display (e.g., the display 260 of FIG. 4). The electronic device 201 may change a focal length of a first background image in response to the user input associated with the first background while maintaining a focal length of a first subject image included in the first image 810. For example, the electronic device 201 may maintain a form of the first subject, and may change a form of the first background.

According to an embodiment, in a case of telephoto conversion (or in a case where a target focal length is longer than the first focal length), the electronic device 201 may transform the form of the first background so that the first background is perceived as larger and closer. Here, in a background of a transformed first image 820, a portion previously hidden by the original first subject may exist as a blank area. The electronic device 201 may perform an in-painting operation to obtain an image in which the blank portion (or area) is colored. The electronic device 201 may obtain a second background image by using at least a portion of the first background image and the image in which the blank portion is colored. The electronic device 201 may combine the second background image and the first subject to obtain a second image 830. For example, the second image 830 may be an image in which the focal length of the first subject included in the first image 810 is maintained while the focal length of the first background is changed to the target focal length (e.g., the focal length is increased).

According to an embodiment, in a case of wide-angle conversion (or in a case where the target focal length is shorter than the first focal length), the electronic device 201 may transform the form of the first background so that the first background is perceived as smaller and farther. Here, in a background of a transformed first image 840, a portion not visible in the first background may exist as a blank area. The electronic device 201 may perform an out-painting operation to obtain a background image in which the blank portion (or area) is colored. The electronic device 201 may obtain a second background image by using the first background image and the image in which the blank portion is colored. The electronic device 201 may combine the second background image and the first subject to obtain a second image 850. For example, the second image 850 may be an image in which the focal length of the first subject included in the first image 810 is maintained while the focal length of the first background is changed to the target focal length (e.g., the focal length is decreased).

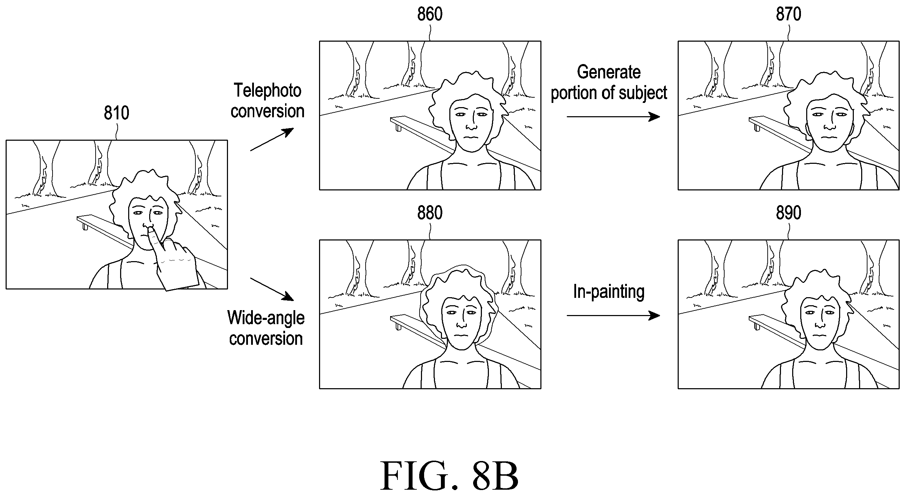

FIG. 8B is a diagram illustrating a method in which an electronic device changes a focal length of a subject included in a first image according to an embodiment.

Referring to FIG. 8B, according to an embodiment, the electronic device (e.g., the electronic device 201 of FIG. 4) may identify a user input (e.g., a touch input) associated with a first subject included in a first image 810 corresponding to a first focal length displayed on a display (e.g., the display 260 of FIG. 4). The electronic device 201 may change a focal length of a first subject image in response to the user input associated with the first subject while maintaining a focal length of a first background image included in the first image 810. For example, the electronic device 201 may maintain a form of the first background, and may change a form of the first subject.

According to an embodiment, in the case of telephoto conversion (or in a case where a target focal length is longer than the first focal length), the electronic device 201 may transform the form of the first subject so that the first subject is perceived as more planar. For example, a first subject image corresponding to a first subject in a transformed first image 860 may additionally include a feature (e.g., a portion of an ear hidden by hair) previously not reflected in the first subject. According to an implementation, the transformed first subject may be larger than the original first subject. Here, the electronic device 201 may eliminate a distortion of the first subject caused by a change in the focal length. The electronic device 201 may combine the first background image and a second subject image including the transformed first subject to obtain a second image 870. For example, the second image 870 may be an image in which the focal length of the first subject included in the first image 810 is maintained while the focal length of the first background is changed to the target focal length (e.g., the focal length is increased).

According to an embodiment, in the case of wide-angle conversion (or in a case where the target focal length is shorter than the first focal length), the electronic device 201 may transform the form of the first subject so that the first subject is perceived as more three-dimensional. According to an implementation, the transformed first subject may be smaller than the original first subject. Here, in a first background image of a transformed first image 880, a portion previously hidden by the original first subject may exist as a blank area. The electronic device 201 may perform an in-painting operation to obtain a background image in which the blank portion (or area) is colored. The electronic device 201 may obtain a first background image by using at least a portion of the first background image and the image in which the blank portion is colored. Here, the electronic device 201 may obtain a second subject image in which a distortion of the first subject due to a change in the focal length is added. The electronic device 201 may combine the first background image and the second subject image to obtain a second image 890. For example, the second image 890 may be an image in which the focal length of the first background included in the first image 810 is maintained while the focal length of the first subject is changed to the target focal length (e.g., the focal length is decreased).

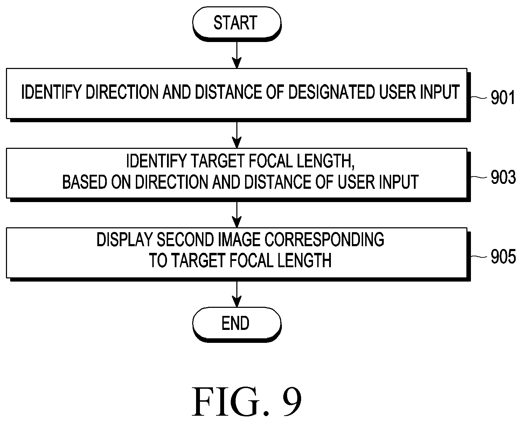

FIG. 9 is a flowchart illustrating a method in which an electronic device adjusts a focal length of an image, based on a direction and a distance of a user input according to an embodiment.

Referring to FIG. 9, according to an embodiment, in operation 901, the electronic device (e.g., the electronic device 201 of FIG. 4) may identify a direction and a distance of a designated user input to adjust a focal length of a first image. For example, the user input may include a drag input or a pinch input associated with the first image displayed on a display (e.g., the display 260 of FIG. 4). For example, the designated user input to adjust the focal length of the first image may vary according to a specific application or a specific function.

According to an embodiment, in operation 903, the electronic device 201 may identify (e.g., determine or judge) a target focal length, based on the direction and the distance of the user input. For example, the electronic device 201 may determine whether to increase or decrease the focal length of the original first image, based on the direction of the user input. The electronic device 201 may determine a decree to which the focal length of the first image is adjusted, based on the distance (or travel distance) of the user input. The electronic device 201 may identify the target focal length, based on a degree of increase or decrease in the focal length of the first image.

According to an embodiment, in operation 905, the electronic device 201 may obtain a second image corresponding to the target focal length, based on the user input, and may display the obtained second image on a display 260.

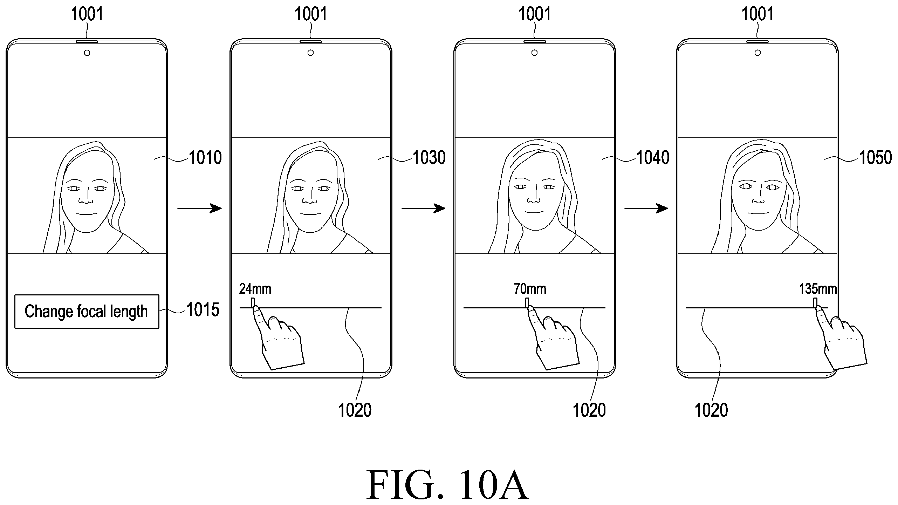

FIG. 10A is a diagram illustrating a method in which an electronic device adjusts a focal length of an image, based on a user input on a slide bar according to an embodiment.

Referring to FIG. 10A, according to an embodiment, the electronic device 1001 (e.g., the electronic device 201 of FIG. 4) may display a first image 1010 on a display. The electronic device 1001 may display a first object 1015 for changing a focal length of the first image 1010.

According to an embodiment, when a user input (e.g., a touch input) on the first subject 1015 is identified, the electronic device 1001 may display a user interface (e.g., a slide bar 1020) for adjusting the focal length of the first image 1010 on the display. For example, based on a user input on the slide bar 1020, the electronic device 1001 may display a second image obtained by adjusting the focal length of the first image to a target focal length corresponding to the user input. For example, when the user input indicates a focal length of a first value (e.g., 24 mm), the electronic device 1001 may display a second image 1030 corresponding to the focal length. When the user input indicates a focal length of a second value (e.g., 70 mm), the electronic device 1001 may display a second image 1040 corresponding to the focal length. When the user input indicates a focal length of a third value (e.g., 135 mm), the electronic device 1001 may display a second image 1040 corresponding to the focal length. According to an implementation, the user input may be a continuous input (e.g., a drag input), and the electronic device 1001 may continuously display images corresponding to different target focal lengths according to the continuous user input. For example, when the user input is dragged in a right direction, the electronic device 1001 may display images in which the focal length is continuously increased. When the user input is dragged in a left direction, the electronic device 1001 may display images in which the focal length is continuously decreased.

According to an embodiment, when a portrait (e.g., a selfie) is captured through a camera (e.g., 205), the electronic device 1001 may generate a portrait image reflecting a focal length preset by the user (e.g., a user-preferred focal length) in the captured portrait (automatically or based on a user request). For example, the electronic device 1001 may generate a portrait image reflecting a preset focal length (e.g., a user-preferred focal length) by using an AI model (e.g., a generative AI model). The electronic device 1001 may output (e.g., display on the display) and store the generated portrait image.

Although FIG. 10A shows a slide bar in a straight line for adjusting a focal length of an image, technical features of the disclosure may not be limited thereto. For example, a user interface for adjusting a focal length of an image may be configured in various forms. For example, the user interface for adjusting the focal length of the image may be configured as a donut-shaped circular bar, and the electronic device 1001 may increase the focal length by a clockwise user input on the circular bar, and may decrease the focal length by a counter-clockwise user input.

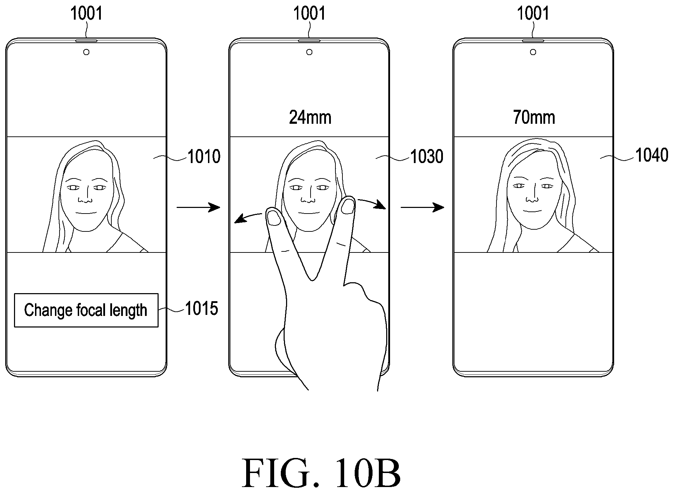

FIG. 10B is a diagram illustrating a method in which an electronic device adjusts a focal length of an image, based on a designated user input according to an embodiment.

Referring to FIG. 10B, according to an embodiment, the electronic device 1001 (e.g., the electronic device 201 of FIG. 4) may display a first image 1010 on a display. The electronic device 1001 may display a first object 1015 for changing a focal length of the first image 1010.

According to an embodiment, when a user input (e.g., a touch input) on the first subject 1015 is identified, the electronic device 1001 may adjust the focal length of the first image 1010 according to an additional input (e.g., a pinch input). For example, the electronic device 1001 may display a second image 1030 corresponding to a target focal length (e.g., 24 mm) decreased from the focal length of the first image 1010, based on a pinch input in a form of two fingers being brought together. Alternatively, the electronic device 1001 may display an image 1040 corresponding to a target focal length (e.g., 70 mm) increased from a focal length of the second image 1030, based on a pinch input in a form of two fingers being spread apart.

According to the foregoing method, the electronic device 1001 may display an image in which an angle of view is increased or reduced based on the first image. For example, the angle of view and the focal length may be inversely proportional to each other. For example, the electronic device 1001 may display the second image 1030 corresponding to an angle of view wider than an angle of view of the first image 1010, based on the pinch input in the form of two fingers being brought together. Alternatively, the electronic device 1001 may display the image 1040 corresponding to an angle of view narrower than the angle of view of the second image 1030, based on the pinch input in the form of two fingers being spread apart.

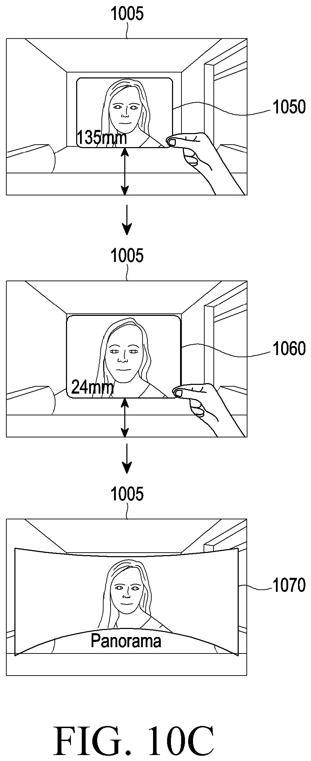

FIG. 10C is a diagram illustrating a method in which an electronic device adjusts a focal length of an image, based on a designated user input according to an embodiment.

Referring to FIG. 10C, according to an embodiment, when the electronic device 201 is configured as a virtual reality (VR) device, an augmented reality (AR) device, a mixed reality (MR) device, an extended reality (XR) device, a video-see through (VST) device, or a head-mounted display (HMD) device, the electronic device 201 may display a first image 1050 corresponding to a first focal length (e.g., 100 mm) on a display 1005. When a user gesture of grabbing and moving the first image 1050 in a forward or backward direction is identified, the electronic device 201 may display a second image 1060 in which the focal length is adjusted. For example, when a user gesture of grabbing and moving the first image 1050 in the forward direction is identified, the electronic device 201 may display the second image 1060 corresponding to a focal length (e.g., 24 mm) shorter than the first focal length on the display 1005.

According to an embodiment, when displaying a screen in a panorama mode (or immersive mode), based on a user input, the electronic device 201 may display a panorama screen on the display 1005. For example, the electronic device 201 may display an image 1070 corresponding to a minimum focal length or a preset focal length (e.g., 24 mm) as a panorama screen.

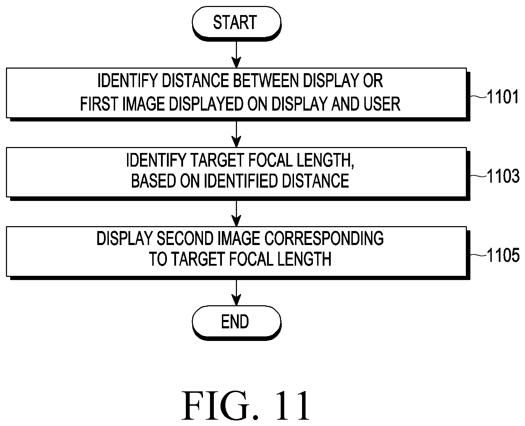

FIG. 11 is a flowchart illustrating a method in which an electronic device adjusts a focal length of an image, based on a distance between a display or the image displayed on the display and a user according to an embodiment.

Referring to FIG. 11, according to an embodiment, in operation 1101, the electronic device (e.g., the electronic device 201 of FIG. 4) may identify a distance between a display (e.g., the display 260 of FIG. 4) or a first image displayed on the display (e.g., the display 1005 of FIG. 10C) and a user. For example, the electronic device 201 may identify a movement of the user by using a camera (e.g., the camera 205 of FIG. 4) and/or a sensor, and may identify the distance between the display 260 or the first image displayed on the display 1005 and the user, based on the identified movement.

According to an embodiment, in operation 1103, the electronic device 201 may identify a target focal length, based on the identified distance. For example, the electronic device 201 may reduce the focal length as the identified distance decreases. That is, the electronic device 201 may determine the target focal length to be shorter than an existing focal length as the identified distance decreases. Alternatively, the electronic device 201 may increase the focal length as the identified distance increases. That is, the electronic device 201 may determine the target focal length to be longer than the existing focal length as the identified distance increases.

According to an embodiment, in operation 1105, the electronic device 201 may obtain and display a second image corresponding to the target focal length.

According to the foregoing method, the electronic device 201 may display an image with a changed focal length as the user approaches or recedes from the electronic device 201. Accordingly, the electronic device 201 may provide an effect in which a subject included in the image appears to progressively approach or recede according to the distance from the user.

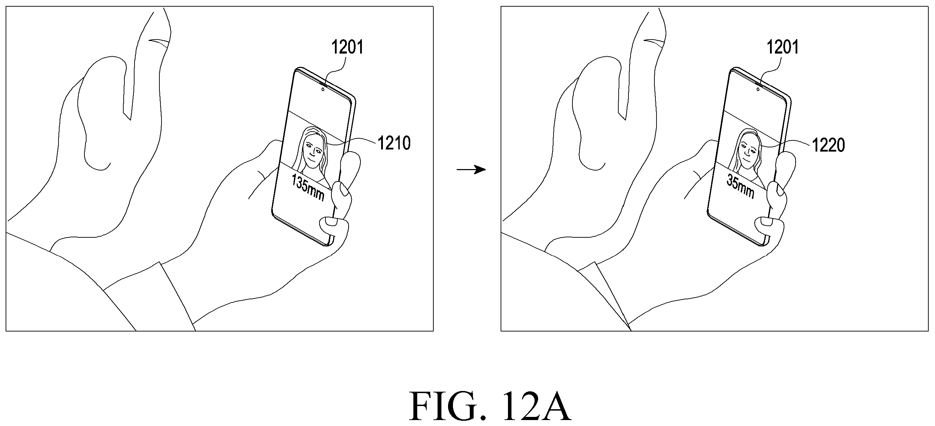

FIG. 12A is a diagram illustrating a method in which an electronic device adjusts a focal length of an image, based on a distance between a display and a user according to an embodiment.

Referring to FIG. 12A, according to an embodiment, the electronic device 1201 (e.g., the electronic device 201 of FIG. 4) may identify a distance between a display (e.g., the display 260 of FIG. 4) and a user. For example, the electronic device 201 may identify a movement of the user by using a camera (e.g., the camera 205 of FIG. 4) and/or a sensor, and may identify the distance between the display 260 and the user, based on the identified movement.

According to an embodiment, the electronic device 1201 may reduce a focal length of a first image 1210 as the distance between the electronic device 1201 and the user decreases. For example, when the distance between the electronic device 1201 and the user is a first length, the electronic device 1201 may display the first image 1210 corresponding to a first focal length (e.g., 135 mm). When the distance between the electronic device 1201 and the user is a second length shorter than the first length, the electronic device 1201 may display a second image 1220 corresponding to a second focal length (e.g., 35 mm) shorter than the first focal length (e.g., 135 mm).

According to an embodiment, the electronic device 1201 may increase the focal length of the first image 1210 as the distance between the electronic device 1201 and the user increases.

According to the foregoing method, the electronic device 1201 may provide an effect in which a subject included in an image appears to progressively approach or recede according to the distance between the user and the electronic device 1201.

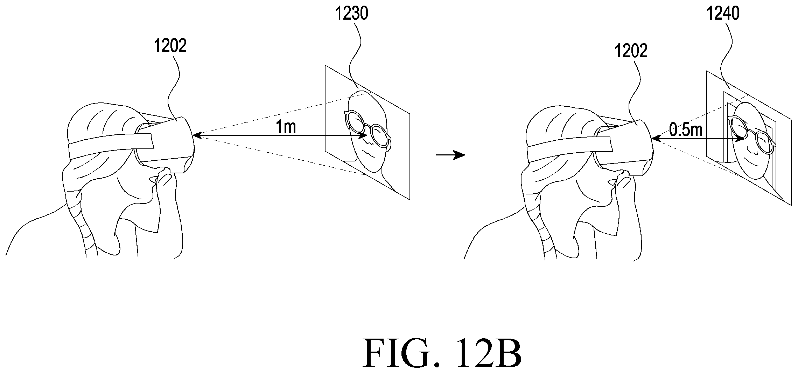

FIG. 12B is a diagram illustrating a method in which an electronic device adjusts a focal length of an image, based on a distance between the image displayed on a display and a user according to an embodiment.

Referring to FIG. 12B, according to an embodiment, the electronic device 1201 (e.g., the electronic device 201 of FIG. 4) may identify a distance between a display (e.g., the display 260 of FIG. 4) and a user. For example, the electronic device 201 may identify a movement of the user by using a camera (e.g., the camera 205 of FIG. 4) and/or a sensor, and may identify the distance between the display 260 and the user, based on the identified movement.

According to an embodiment, the electronic device (e.g., a VR device) 1202 may reduce a focal length of a first image 1230 as the distance between the electronic device 1202 and the user decreases. For example, when the distance between the electronic device 1201 and the user is a first length (e.g., 1 m), the electronic device 1201 may display the first image 1230 corresponding to a first focal length. When the distance between the electronic device 1201 and the user is a second length (e.g., 0.5 m) shorter than the first length, the electronic device 1202 may display a second image 1240 corresponding to a second focal length shorter than the first focal length.

According to an embodiment, the electronic device 1202 may increase the focal length of the first image 1230 as the distance between the electronic device 1202 and the user increases.

According to the foregoing method, the electronic device 1202 may provide an effect in which a subject included in an image appears to progressively approach or recede according to the distance between the user and the electronic device 1202.

An electronic device 201 according to an embodiment may include a processor 220 and memory 230 storing instructions. The instructions according to an embodiment may be configured to, when executed by the processor, cause the electronic device to obtain a first image captured based on a first focal length. The instructions according to an embodiment may be configured to, when executed by the processor, cause the electronic device to identify a first subject image corresponding to a first subject included in the first image and a first background image corresponding to a first background of the first subject in response to a command to edit the first image. The instructions according to an embodiment may be configured to, when executed by the processor, cause the electronic device to obtain, using an AI model, a second subject image by transforming the first subject image based on a target focal length. The instructions according to an embodiment may be configured to, when executed by the processor, cause the electronic device to obtain a second image corresponding to the target focal length, the second image including the second subject image transformed based on the target focal length.

The instructions according to an embodiment may be configured to, when executed by the processor, cause the electronic device to separate the first subject and the first background included in the first image. The instructions according to an embodiment may be configured to, when executed by the processor, cause the electronic device to obtain, using the AI model, the first background image by performing an in-painting operation or an out-painting operation on a first area corresponding to the first subject image excluded from the first image. The instructions according to an embodiment may be configured to, when executed by the processor, cause the electronic device to transform at least one of the first subject image or the first background image, based on the target focal length.

The instructions according to an embodiment may be configured to, when executed by the processor, cause the electronic device to transform, based on a first user input associated with the first background among the first subject or the first background, the first background image based on the target focal length while maintaining the first subject image.

The instructions according to an embodiment may be configured to, when executed by the processor, cause the electronic device to obtain a second background image corresponding to the target focal length by using a second area obtained by performing an in-painting operation on a portion of the first background image corresponding to the target focal length and the first area corresponding to the first subject image when the target focal length is longer than the focal length of the first background. The instructions according to an embodiment may be configured to, when executed by the processor, cause the electronic device to obtain the second background image by using the first background image and a third area obtained by performing an out-painting operation on the first background image when the target focal length is shorter than the focal length of the first background. The instructions according to an embodiment may be configured to, when executed by the processor, cause the electronic device to obtain a third image by combining the second background image with the first subject image.

The instructions according to an embodiment may be configured to, when executed by the processor, cause the electronic device to transform, based on a second user input associated with the first subject among the first subject or the first background, the first subject image based on the target focal length while maintaining the first background image.

The instructions according to an embodiment may be configured to, when executed by the processor, cause the electronic device to obtain the second subject image by transforming the first subject image based on the target focal length when the target focal length is longer than the focal length of the first subject. The instructions according to an embodiment may be configured to, when executed by the processor, cause the electronic device to obtain the second subject image by transforming the first subject image based on the target focal length when the target focal length is shorter than the focal length of the first subject. The instructions according to an embodiment may be configured to, when executed by the processor, cause the electronic device to obtain the second image by combining the second subject image with the first background image.

The instructions according to an embodiment may be configured to, when executed by the processor, cause the electronic device to obtain the second background image corresponding to the target focal length by performing an in-painting operation on a portion of the first area corresponding to the first subject image when the target focal length is shorter than the focal length of the first subject.

The instructions according to an embodiment may be configured to, when executed by the processor, cause the electronic device to transform at least one of the first subject image or the first background image, based on the target focal length by inputting information about a lens used to capture the first image, an angle of view of the first image, the first focal length, a distance between the first subject and a camera that captures the first image, and the target focal length to the AI model.

The instructions according to an embodiment may be configured to, when executed by the processor, cause the electronic device to obtain the second image corresponding to an image in which the focal length of the first image is increased or decreased, based on a direction and a distance of a pre-specified user input.

The instructions according to an embodiment may be configured to, when executed by the processor, cause the electronic device to determine the target focal length, based on a distance between a user and a display 260 included in the electronic device.

An operation method of an electronic device 201 according to an embodiment may include obtaining a first image captured based on a first focal length. The operation method of the electronic device according to an embodiment may include identifying a first subject image corresponding to a first subject included in the first image and a first background image corresponding to a first background of the first subject in response to a command to edit the first image. The operation method of the electronic device according to an embodiment may include obtaining, using an AI model, a second subject image by transforming the first subject image, based on a target focal length. The operation method of the electronic device according to an embodiment may include obtaining a second image corresponding to the target focal length, the second image including the second subject image transformed based on the target focal length.

The operation method of the electronic device may further include separating the first subject and the first background included in the first image. The operation method of the electronic device may further include obtaining, using the AI model, the first background image by performing an in-painting operation or an out-painting operation on a first area corresponding to the first subject image excluded from the first image. The operation method of the electronic device may further include transforming at least one of the first subject image or the first background image, based on the target focal length.

The operation method of the electronic device may further include transforming, based on a first user input associated with the first background among the first subject or the first background, the first background image based on the target focal length while maintaining the first subject image.

The operation method of the electronic device may further include obtaining a second background image corresponding to the target focal length by using a second area obtained by performing an in-painting operation on a portion of the first background image corresponding to the target focal length and the first area corresponding to the first subject image when the target focal length is longer than the focal length of the first background. The operation method of the electronic device may further include obtaining the second background image by using the first background image and a third area obtained by performing an out-painting operation on the first background image when the target focal length is shorter than the focal length of the first background. The operation method of the electronic device may further include obtaining a third image by combining the second background image with the first subject image.

The operation method of the electronic device may further include transforming, based on a second user input associated with the first subject among the first subject or the first background, the first subject image based on the target focal length while maintaining the first background image.

The operation method of the electronic device may further include obtaining the second subject image by transforming the first subject image based on the target focal length when the target focal length is longer than the focal length of the first subject. The operation method of the electronic device may further include obtaining the second subject image by transforming the first subject image based on the target focal length when the target focal length is shorter than the focal length of the first subject. The operation method of the electronic device may further include obtaining the second image by combining the second subject image with the first background image.

The operation method of the electronic device may further include obtaining the second background image corresponding to the target focal length by performing an in-painting operation on a portion of the first area corresponding to the first subject image when the target focal length is shorter than the focal length of the first subject.

The operation method of the electronic device may further include obtaining the second image corresponding to an image in which the focal length of the first image is increased or decreased, based on a direction and a distance of a pre-specified user input.

The operation method of the electronic device may further include determining the target focal length, based on a distance between a user and a display 260 included in the electronic device.

A non-transitory computer-readable recording medium 130 and 230 according to an embodiment may store instructions to execute an operation of obtaining a first image captured based on a first focal length, an operation of identifying a first subject image corresponding to a first subject included in the first image and a first background image corresponding to a first background of the first subject in response to a command to edit the first image, an operation of obtaining, using an AI model, a second subject image by transforming the first subject image, based on a target focal length, and an operation of obtaining a second image corresponding to the target focal length by combining the second subject image transformed based on the target focal length with the first background image or the second background image.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1440) including one or more instructions that are stored in a storage medium (e.g., internal memory 1436 or external memory 1438) that is readable by a machine (e.g., the electronic device 1401). For example, a processor (e.g., the processor 1420) of the machine (e.g., the electronic device 1401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device 201, comprising:
a processor 220; and
memory 230 storing instructions that, when executed by the processor, cause the electronic device to:
obtain a first image captured based on a first focal length,
in response to a command to edit the first image, identify a first subject image and a first background image included in the first image,
obtain, using an AI model, a second subject image by transforming the first subject image based on a target focal length different from the first focal length,
obtain a second image corresponding to the target focal length, wherein the second image includes the second subject image transformed based on the target focal length.

2. The electronic device of claim 1, wherein the instructions, when executed by the processor, cause the electronic device to:
separate the first subject and the first background included in the first image,
obtain, using the AI model, a first background image by performing an in-painting operation or an out-painting operation on a first area corresponding to the first subject image excluded from the first image,
transform at least one of the first subject image or the first background image based on the target focal length.

3. The electronic device of any one of claims 1 to 2, wherein the instructions, when executed by the processor, cause the electronic device to:
based on a first user input to the first background among the first subject or the first background, transform the first background image based on the target focal length while maintaining the first subject image.

4. The electronic device of any one of claims 1 to 3, wherein the instructions, when executed by the processor, cause the electronic device to:
when the target focal length is longer than the focal length of the first background, obtain a second background image corresponding to the target focal length using a second area, wherein the second area is obtained by performing an in-painting operation on a part of the first background image corresponding to the target focal length and a first area corresponding to the first subject image,
when the target focal length is shorter than the focal length of the first background, obtain the second background image using the first background image and a third area, wherein the third area is obtained by performing an out-painting operation on the first background image, and
obtain a third image by combining the second background image with the first subject image.

5. The electronic device of any one of claims 1 to 4, wherein the instructions, when executed by the processor, cause the electronic device to:
based on a second user input to the first subject among the first subject or the first background, transform the first subject image based on the target focal length while maintaining the first background image.

6. The electronic device of any one of claims 1 to 5, wherein the instructions, when executed by the processor, cause the electronic device to:
when the target focal length is longer than the focal length of the first subject, obtain the second subject image in which the first subject image is transformed based on the target focal length,
when the target focal length is shorter than the focal length of the first subject, obtain the second subject image in which the first subject image is transformed based on the target focal length, and
obtain the second image by combining the second subject image with the first background image.

7. The electronic device of any one of claims 1 to 6, wherein the instructions, when executed by the processor, cause the electronic device to:
when the target focal length is shorter than the focal length of the first subject, obtain the second background image corresponding to the target focal length by performing an in-painting operation on a part of the first area corresponding to the first subject image.

8. The electronic device of any one of claims 1 to 7, wherein the instructions, when executed by the processor, cause the electronic device to:
transform at least one of the first subject image or the first background image based on the target focal length by inputting information about a lens that captured the first image, an angle of view of the first image, the first focal length, a distance between the first subject and a camera that captured the first image, and the target focal length to the AI model.

9. The electronic device of any one of claims 1 to 8, wherein the instructions, when executed by the processor, cause the electronic device to:
based on a direction and a distance of a pre-specified user input, obtain the second image corresponding to an image in which the focal length of the first image is increased or decreased.

10. The electronic device of any one of claims 1 to 9, wherein the instructions, when executed by the processor, cause the electronic device to:
based on a distance between a user and a display 260 included in the electronic device, determine the target focal length.

11. An operation method of an electronic device (201), the method comprising:
obtaining a first image captured based on a first focal length;
in response to a command to edit the first image, identifying a first subject image corresponding to a first subject included in the first image and a first background image corresponding to a first background of the first subject;
obtaining, using an AI model, a second subject image by transforming the first subject image, based on a target focal length; and
obtaining a second image corresponding to the target focal length, the second image comprising the second subject image transformed based on the target focal length.

12. The operation method of claim 11, further comprising:
separating the first subject and the first background included in the first image;
obtaining, using the AI model, the first background image by performing an in-painting operation or an out-painting operation on a first area corresponding to the first subject image excluded from the first image; and
transforming at least one of the first subject image or the first background image, based on the target focal length.

13. The operation method of claim 11 or 12, further comprising
based on a first user input associated with the first background among the first subject or the first background, transforming the first background image, based on the target focal length, while maintaining the first subject image.

14. The operation method of any one of claims 11 to 13, further comprising:
in case that the target focal length is longer than the focal length of the first background, obtaining a second background image corresponding to the target focal length by using a second area obtained by performing an in-painting operation on a part of the first background image corresponding to the target focal length and the first area corresponding to the first subject image;
in case that the target focal length is shorter than the focal length of the first background, obtaining the second background image by using the first background image and a third area obtained by performing an out-painting operation on the first background image; and
obtaining a third image by combining the second background image with the first subject image.

15. The operation method of any one of claims 11 to 14, further comprising
based on a second user input associated with the first subject among the first subject or the first background, transforming the first subject image, based on the target focal length, while maintaining the first background image.
